# EUROPEAN PATENT SPECIFICATION

(11) **EP 1 988 638 B1**
(45) Date of publication and mention of the grant of the patent: **13.08.2014**
(21) Application number: 07008806.7
(22) Date of filing: 30.04.2007
(51) Int. Cl.: H04B 1/08

(54) **Portable personal navigation device**
Tragbare persönliche Navigationsvorrichtung
Dispositif de navigation personnel portable

(43) Date of publication of application: 05.11.2008
(73) Proprietor: Harman Becker Automotive Systems GmbH, 76307 Karlsbad (DE)
(72) Inventor: Wlotzka, Paul, 72622 Nürtingen (DE)
(74) Representative: Bertsch, Florian Oliver

(56) References cited:
- EP-A- 1 298 418
- DE-A1- 19 640 735
- GB-A- 2 411 552
- US-B2- 6 868 264

## Description

The present invention relates to a portable personal navigation device that is provided with means to receive and play back radio programs. The portable personal navigation device can thus be used as a radio.

### Related Art

Portable personal navigation devices (PNDs) are recently being used by a great number of people for navigating in populated and remote areas. For navigating in populated areas, these devices are usually stored or fixed inside a vehicle, whereas for navigating in remote areas, such as when hiking, these devices are carried on the body or in a backpack. In both situations, people often like to be informed or entertained by radio programs. Means for receiving radio programs are generally provided inside a vehicle, yet when hiking, additional devices for receiving radio programs have to be carried along. The reception of radio programs is of particular importance when hiking, for example to inform the hiker of the current weather situation. On the other hand, the hiker has only a limited amount of space available for carrying equipment, and needs to reduce the carried weight as much as possible. Thus, it is a disadvantage for the hiker to have to carry two devices, one for navigation and one for receiving radio programs.

Modern navigation systems for vehicles are often shaped in the form of a car stereo, wherein the system comprises the functionality of both a car stereo and a navigation device. Such a system may for example be equipped with a navigation unit for processing data relating to navigation, and for displaying navigation information to the driver, and with one or more tuners for receiving traffic information from a traffic message channel (TMC) and for playing back radio programs. The traffic message channel is generally transmitted as part of an RDS signal in the FM frequency range. The information submitted through the TMC is used by the navigation system to reroute a given route in case a traffic jam is reported on the given route. These systems have proved to be very useful, yet they are only available for fixed installation inside a vehicle. These systems have the disadvantage that they cannot be used for navigation and radio playback outside the vehicle.

Furthermore, handheld navigation devices are known in the art, such as pure navigation devices comprising a GPS receiver, or multifunctional devices, such as handheld personal computers, which may be extended by additional hard- and software to enable navigation. The multifunctional devices may furthermore comprise means for outputting audio signals, such as loudspeakers. Most recently, GPS receivers are being directly integrated into personal digital assistant (PDA) devices. Thus, the portable PDA device is provided with a navigational functionality. Even though some of these devices are equipped with a radio frequency receiver for receiving TMC signals, these devices are not able to receive radio programs. This is a disadvantage because an additional device is needed to receive a radio program.

The UK patent application GB 2 411 552 A discloses a modular wrist based device deployable as a mobile communication handset. The wrist strap supports a microphone and a speaker at alternate ends. This kind of modular wrist phone can be used as a portable handset for voice over IP or mobile communication. Modular units can be connected to the wrist strap, and the application mentions a GPS module and a digital radio module.

DE 196 40 735 A1 discloses a telematics unit for a vehicle. The telematics unit comprises a car radio with a RDS module, a cellular phone and a navigation system. The telematics unit is mounted to the dashboard of the vehicle.

### Summary of the Invention

Therefore, a need exists to provide a device that is portable, has a navigational functionality and is able to receive radio programs.

This need is accomplished by a portable personal navigation device as described in claim 1. Preferred embodiments of the invention are described in the dependent claims.

According to the invention, the portable personal navigation device comprises at least one receiver for radio waves and means for outputting audio signals, wherein the receiver is configured so as to receive radio programs and wherein said means for outputting audio signals are configured so as to play back said radio programs. The portable personal navigation device may comprise one receiver, it may also comprise two or three receivers, for example for receiving different radio bands or for simultaneously receiving two radio channels, for example a radio program and a traffic message channel. The means for outputting audio signals may comprise internal speakers, headphones that may be connected to the portable personal navigation device, or simply a connector, through which sound signals are output to another electronic device. The radio receiver may be controlled by analog or digital control elements, such as analog potentiometers or incremental encoders. The radio receiver may also be controlled by a microprocessor, wherein the input takes place by other means, such as a touchscreen or a remote control. The means for outputting audio signals may also be used to output sound from other audio sources, such as the playback of MP3 sound files or the output of audible navigation instructions by the portable personal navigation device. The advantage of such a device is that it combines both the functionality of a personal navigation device with the functionality of a radio, while still being portable.

According to an embodiment of the present invention, the receiver of the portable personal navigation device configured to receive radio programs is also configured so as to receive a traffic message channel. That way, radio programs and a traffic message channel can both be received by one receiver. This means that only one receiver has to be provided, wherein this receiver can be switched between receiving the radio program or receiving a traffic message channel. For example, an existing receiver for the traffic message channel can be reconfigured so that it is possible to receive radio programs with said receiver. If only one receiver is provided, the production cost as well as the weight of the personal navigation device can be reduced.

Alternatively, the portable personal navigation device may comprise two receivers for radio waves, wherein one receiver is configured so as to receive radio programs whereas the other receiver is configured so as to receive a traffic message channel. That way, the traffic message channel can still be received and the navigation route can still be automatically updated according to the received traffic information, while the user can listen to radio programs. This may be advantageous in situations where the personal navigation device is used for both navigation and radio playback.

Preferably, the receiver configured to receive radio programs can be tuned to at least a portion of one or a plurality of the following radio bands: very high frequency (VHF), shortwave (HF), medium wave, longwave. The radio bands may have slightly different frequency ranges in different countries. Therefore, the receiver may be able to receive the full band in one country, whereas it is only able to receive a part of a band in another country. Preferably, the receiver is configured so that it can be tuned to the full band in most countries. The receiver may be configured so that it can be tuned to only one band, it may also be configured so that it can be tuned to two, three, four or even more radio bands. Configuring the receiver for receiving multiple radio bands has the advantage that radio programs from different sources can be received. For example, when using the longwave radio band, radio programs from very far away sources may be received. The use of the VHF band provides high quality sound transmission. Depending on the regulations for receiving radio waves, which may differ from country to country, certain radio frequencies may have to be restricted. In general, the range of radio bands that the receiver is able to tune to will depend on the specific application, for which the portable personal navigation device is configured. To a person skilled in the art, it should be clear that different modulations are used for the different radio bands, such as frequency modulation (FM), amplitude modulation (AM) or signal side band (SSB), and that the receiver formed to receive a certain band is also formed so as to demodulate said band. The receiver may also be configured to receive radio programs broadcast digitally. The digital audio broadcasting technique enables the reception of radio programs with improved sound quality and decreased background noise and interferences. The audio data received digitally by the receiver may be compressed, e.g. by using the MUSICAM system or Advanced Audio Coding-Codecs. Accordingly, the receiver may be formed so as to receive and decompress digital radio programs or digital audio broadcasts. The digital radio programs may be broadcast using carrier frequencies that are different from the carrier frequencies of the analog radio broadcasts. Accordingly, the receiver may be formed so as to receive these frequencies such as the VHF band III ranging from 174-230 MHz or other bands transmitting digital radio programs. For this purpose, the personal navigation device may be provided with three receivers, one for receiving a traffic message channel, one for receiving analog radio programs and one for receiving digital radio programs.

According to the invention, the portable personal navigation device comprises means for recording radio programs. These means may be analog means, such as a magnetic tape, but preferentially, the radio programs are recorded digitally. For this purpose, the sound signal demodulated by the radio receiver may be converted to digital sound data by an analog-to-digital converter. Preferably, the sound data is compressed before recording, wherein different compression standards may be used, yet it may also be stored uncompressed. The digital sound data may at first be recorded in a temporary memory, such as the personal navigation devices' RAM, and may later be stored on an internal hard drive or internal flash memory, or an external memory, such as a compact flash card or a micro drive or a USB stick or any other kind of mobile memory that can be connected to the personal navigation device. The radio program may be recorded live, meaning that the radio program is recorded as it is played back. According to the invention, the means for recording radio programs are capable of recording the radio program at predetermined times, wherein these times may be programmed by a user of the personal navigation device. This has the advantage that the user may, for example set the timer so that a weather broadcast is periodically recorded, whereby the user has always access to the latest weather broadcast. This may be very useful when hiking, particular in areas where weather changes are common. Another advantage is that a user may record his favorite radio program, for listing to the radio program at a later time suitable for the user. The way in which the radio recording is stored is thereby not of importance, it is just important that the radio program can be recorded by the user.

Preferably, the means for recording radio programs comprise a memory card, said memory card being arranged in a slot provided in the portable personal navigation device. The memory card can be easily removed from the slot and exchanged with another memory card. Several types of memory cards are known in the art, and it should be clear that it does not matter which type of memory card is used to record the radio program. Examples of such memory cards are compact flash cards, micro drives, memory sticks, SD cards, USB sticks, and the like. Recording the radio program on a memory card that can easily be exchanged has the advantage that when the memory card is full, it can simply be substituted by an empty memory card, whereby recording of the radio program can be continued. Furthermore, recordings in that form can be collected and archived, and a memory card with a stored recording may be inserted into the slot of the personal navigation device for playback of the recording at a later time. Furthermore, memory cards with recordings may be exchanged between different users.

There are different means by which sound can be output by the portable personal navigation device. According to an embodiment, the means for outputting audio signals comprise at least one loudspeaker, integrated in the portable personal navigation device. According to another embodiment, the means for outputting audio signals comprise a connector, said connector providing said audio signals in the form of time varying voltages. For example, headphones may be connected to that connector, or another audio device, such as a home stereo system or a car stereo system or a portable stereo system or external speakers, such as known from computer systems, which may be active or passive. Using integrated loudspeakers has the advantage that no other device is required to output the audio signals. On the other hand, due to the limited space in the portable personal navigation device, integrated loudspeakers are generally small in size and thus have a very limited dynamic range. Connecting the portable personal navigation device to another audio output device by means of the connector may thus provide a better sound quality. Headphones may be used in situations where the surrounding noise level is high and other persons may be distracted by the sound output. Generally, it is preferred to provide both integrated loudspeakers and a connector for outputting the audio signals.

Generally, an antenna is needed for a good reception of radio waves. According to another aspect of the invention, an antenna is provided for receiving the radio waves, said antenna being amounted to the portable personal navigation device. The antenna may be mounted inside the device or may be mounted to the outside of the device. Inside the device, the antenna may be formed in the shape of track on a printed circuit board. It may also be formed as a spiral on linear antenna inside the housing. Preferably, the antenna is formed as an extendable antenna that can be extended beyond the perimeters of the housing. Such an extendable antenna may be mounted inside the housing so that it does hardly protrude from the housing when retracted, or it may be mounted on the outside of the housing. An antenna generally provides good reception when its length is a multiple or a fraction of the wavelength of the radio waves that are supposed to be received. Thus, an extendable antenna is preferential for receiving longer wavelength radio bands. Generally, a great variety of antennas are known in the art. It should be understood that it does not matter which type of antenna is used in the portable personal navigation device as long as the antenna is adapted to receive the appropriate radio band. One or more radio bands may be received by one antenna. Alternatively, multiple antennas may be provided for a better reception of multiple radio bands. For example, one antenna may be provided to receive the VHF band, whereas another antenna may be provided to receive the medium wave band. Furthermore, an antenna may be provided for receiving the radio waves wherein the antenna is connected to the portable personal navigation device by a connector. This has the advantage that the portable personal navigation device can receive radio programs through an external antenna, wherein the external antenna may be optimized for several radio bands. Such an external antenna can for example be the antenna of a car, or the antenna of a house. Yet it may also be a mobile cable antenna, for example such a type of antenna that is currently provided with TMC receivers. Such an external antenna may yield better reception than the antenna mounted to the personal navigation device. Since the personal navigation device is intended for mobile use, it is preferential to use an antenna mounted to the portable personal navigation device.

In a preferred embodiment of the present invention, the portable personal navigation device comprises a display, and a radio menu is displayed on the display by actuation of control elements disposed on the portable personal navigation device, said radio menu comprising at least functions for controlling said receiver for radio waves. The radio menu may also comprise other functions, for example for controlling the audio output. The menu may include functions for changing the frequency that is received by the receiver, or for changing the radio band, i.e. the frequency range that is currently received, and other functions related radio reception, e.g. noise suppression and the like. The portable personal navigation device may be provided with a functionality similar to that of a multi-band radio. Accordingly, the radio menu may comprise functions that are usually provided on a multi-band radio. Buttons resampling those on a multi-band radio may for example be provided on a touchscreen, where they can be actuated by pressing them with a finger or a pen. Alternatively, control elements may be provided on the personal navigation device which directly control the radio receiver. Using a radio menu displayed on a display to control the radio receiver has the advantage that the functions in the menu may be changed according to the requirements, whereas using control elements that directly control the receiver has the advantage that some applications currently running on the personal navigation device, such as a navigational application, do not have to be interrupted to change the radio settings. In general, only limited space is available on a personal navigation device for control elements, whereby it is pref erential to provide control of the radio receiver by a radio menu. Providing a functionality similar to that of a multi-band radio is very advantageous for world travelers, which may use the device to navigate in a foreign country, while still wanting to receive radio broadcast from their county of origin. Particularly, shortwave radio waves may be received over very long distances. To enable the reception of multiple radio bands therefore makes the portable personal navigation device very versatile and especially useful for world travelers.

According to another embodiment, the receiver for receiving the radio programs is an existing traffic message channel receiver of the portable personal navigation device and the means for outputting audio signals are existing means for outputting audio signals of the portable personal navigation device, wherein both are reconfigured in such a way that the receiver receives radio broadcast, said radio broadcast being played back by said means for outputting audio signals. This means that no new hardware has to be provided, but existing hardware of the personal navigation device is reconfigured in such a way that radio programs can be received and played back. Navigation devices in the form of personal digital assistants (PDAs) often already comprise means for outputting audio signals, such as loudspeakers, and recently, these devices have been provided with traffic message channel receivers. Thus, only small changes to the hardware and the software of the PDA may be required to enable reception of radio programs. Accordingly, the present embodiment of the invention provides a very cost effective method of enabling radio reception. Reconfiguration in that context can mean a small reconfiguration of the hardware, such as the frequency range that the existing receiver is able to receive or the hardware required for demodulating the radio signals, or the implementation of analog-to-digital conversion of the demodulated signal so that the digital radio signal may be processed and output by the personal navigation device. Furthermore, the software will have to be reconfigured in order to implement the new functionality, and in order to provide a control menu for controlling the receiver and the audio output. Preferentially, more expensive versions of the portable personal navigation device may comprise two receivers so that the receivers can be better adapted to their individual function and so that radio programs and the traffic message channel can both be received simultaneously.

Further objects of the present invention will become evident from the following description, in which preferred embodiments of the present invention are described with the help of figures.

### Brief Description of the Drawings

Fig. 1 is a schematic drawing of a preferred embodiment of the present invention comprising one radio receiver and means for outputting audio signals.
Fig. 2 is a schematic drawing of another embodiment of the portable personal navigation device comprising two receiver and a slot for inserting a memory card.

### Detailed Description of Preferred Embodiments

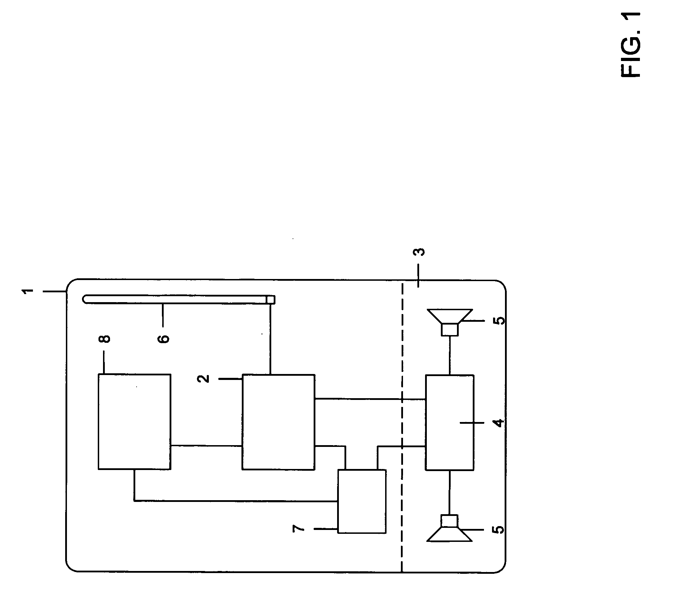

Fig. 1 shows a portable personal navigation device 1 comprising a receiver 2 and means for outputting audio signals 3. The receiver 2 is configured for receiving to multiple radio bands as well as traffic message channels. Radio signals received by the receiver 2 are demodulated and transmitted to the means for outputting audio signals 3 which comprise an amplifier 4 and loudspeakers 5 and 5. The amplifier 4 amplifies the sound signal received from the receiver 2, the sound signal being converted to sound by the loudspeakers 5 and 5. Even though one loudspeaker would be sufficient to give out sound, providing two loudspeakers has the advantage that stereo sound can be played back. Radio waves are received by the receiver 2 by means of an antenna 6. The antenna 6 is only shown schematically in Fig. 1, it may have any shape suitable for receiving radio waves. It may be an internal antenna in the form of a track on a circuit board or in the form of a cable antenna arranged inside the housing of the navigation device. Alternatively, two antennas may be provided, wherein the two antennas are each optimized for receiving a different radio band. This has the advantage that these radio bands can be better received. The antenna 6 is an extendable antenna that can be extended beyond the housing of the portable personal navigation device, comparable to a portable radio antenna.

The portable personal navigation device 1 furthermore comprises a control unit 7. The control unit 7 controls functions of the receiver, such as the tuning and the radio band received, and is does also control the means for outputting audio signals 3, for example the amount of amplification provided by the amplifier 4. The control unit 7 may be controlled by the user by means of control elements (not shown), which may comprise analog control elements, such as potentiometers in the form of turning knobs or sliders, or digital control elements, such as push buttons or incremental encoders or a touchscreen. The portable personal navigation device 1 furthermore comprises a navigational unit 8. The navigational unit comprises all elements necessary to enable navigation, such as a GPS antenna and receiver, and means and software for processing the GPS signals, as well as means for user communication, such as a display and input means. When the navigation device 1 is in the navigational mode, it receives a traffic message channel using the receiver 2, wherein the information provided by the traffic message channel is sent to the navigational unit 8. The navigational unit 8 can then calculate routes taking into account the information provided. The tuning of the receiver 2 to the traffic message channel may occur by the navigational unit 8 sending control signals to the control unit 7. With such an arrangement, the personal navigation device of the present embodiment can be used for both navigation with TMC functionality and radio program reception, while only using one receiver. Alternatively, a radio menu may be provided on the display of navigational unit 8. The selection of a function from the radio menu is then communicated to the control unit 7 which controls the receiver 2 or the means for outputting audio signals 3 accordingly.

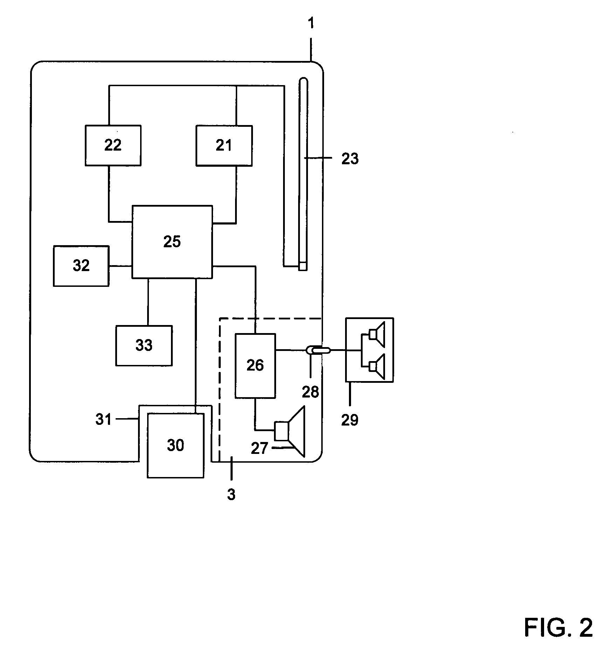

Fig. 2 shows another embodiment of the personal navigation device 1. In Figs. 1 and 2, the same reference numerals denote similar components. In the embodiment of Fig. 2, two receivers 21 and 22 are provided. Both receivers 21 and 22 are connected to an antenna 23, although each receiver may also be connected to a separate antenna. Receiver 21 is optimized to receive traffic message channels, whereas receiver 22 is optimized to receive radio programs, which may be received on different radio bands. The demodulated radio signals undergo an analog-to-digital conversion (not shown) and are transmitted to the control unit 25. Control unit 25 may comprise all means generally provided to operate a personal digital assistant or a personal navigation device, such as a microprocessor and the required software. For the playback of radio programs, the radio signal transmitted from the receiver 22 to the control unit 25 may be processed by the control unit 25, for example by changing the tone of the radio signal, and is subsequently transmitted to the means for outputting audio signals 3. Before transmission, the digital radio signal may undergo digital-to-analog conversion (not shown). The means for outputting audio signals comprise an amplifier 26, a loudspeaker 27 and a connector 28. The means for outputting audio signals may be configured in such a way that when another device is connected via the connector 28, output of sound by the loudspeaker 27 is suppressed. In order to save weight and production costs, only one loudspeaker 27 is provided. Headphones 29 may be connected to the connector 28. Alternatively, a home stereo system or a car stereo system may be connected to the connector 28 by means of a cable (not shown). With such an arrangement, high quality sound output can be achieved. In the present embodiment, the means for outputting audio signals 3 are not only used to play back radio programs received by receiver 22, but also to play back sound from other audio sources, such as from MP3 sound files processed by the control unit 25, or such as navigational instructions. Furthermore, a memory card 30 is provided and is arranged in a slot 31. The memory card 30 is not integrally connected to the portable personal navigation device 1, it can be easily removed from the slot 31 by hand. That way, radio programs received by receiver 22 and processed by control unit 25 can be stored on the memory card 30. Since the memory chard 30 is exchangeable, it can be exchanged when its memory is exhausted and a new empty memory card be inserted into slot 31. That way, radio programs can be stored and archived, or formerly recorded radio programs may be played back at a later time. Control units 25 may be programmed to receive the radio programs periodically, or at predetermined times. That way, a user can determine when a radio program is recorded, and he does not have to immediately listen to the radio program, but can access it a later time. Different types of memory cards 30 are known in the art, and it is not important for the scope of the present invention which type of memory card is used. Before recording a radio program, it may be temporarily stored in an internal memory 32, such as a random access memory (RAM), or may be more permanently stored in an internal memory, such as an internal flash memory or an internal hard drive. That way, the radio program may be modified, for example certain pieces may be cut out, before it is stored on the memory card 30. The radio programs may also only be stored on the internal memory 32. Furthermore, navigational means 33 are provided, comprising for example a GPS receiver and a GPS antenna. The navigational means 33 provide the control unit 25 with navigational information. The control unit 25 can process that information together with information from the traffic message channel receiver 21 for calculating a route. Since two receivers 21 and 22 are provided, receiving the traffic message channel can occur simultaneously with playing back radio programs. That way, receiving the radio program has not to be interrupted for calculating a route or for updating a route with new traffic information. The control unit 25 furthermore comprises control elements and a display (not shown). The display itself may be a control element, for example it may have the form of a touchscreen. By using either one of the control elements or the touchscreen, the user can bring up a radio menu on the display. Such a radio menu comprises functions for controlling the radio program receiver 22. Such functions may include changing the radio band or changing the frequency received, but may also include such functions as activating a noise suppression or enabling the reception of radio programs in stereo. The display is used to display, among other things, information relating to the navigation, or to display information relating to the radio program currently received, or to display control elements by which the portable personal navigation device can be controlled. For example, when using the PND for navigation while receiving a radio program, a status bar may be displayed together with information relating to navigation, said status bar displaying information relating to the radio reception, such as the frequency currently received or RDS information. Such a status bar may also comprise control elements that can be used to change the radio program currently received which may be activated, e.g., via a touchscreen, a cursor or a control element.

As mentioned above, the receiver for radio programs 22 may receive radio programs broadcast in different radio bands, wherein the different radio bands may have different modulations. For example, very high frequency radio signals are frequency modulated, whereas medium wave radio signals are generally amplitude modulated (AM). It should be clear that the radio receiver 22 is formed so as to receive and demodulate radio signals from dif ferent radio bands having different modulations.

When recording radio programs on the memory card 30, the radio program may be digitally recorded either uncompressed or compressed, wherein different compression standards may be used to compress the sound signal. The compression may be either lossless or associated with loss, wherein the quality of a recording with a compression associated with loss is generally denoted by how many bits per second are recorded. Lower bit rates are associated with a higher compression and a lower sound quality. The compression of a recording and the amount of memory available on the memory card 30 determine the duration for which radio programs may be recorded. The compression rate may be set to a fixed value by the user, e.g. to high sound quality corresponding to low compression, wherein the time available for recording the radio program to the memory card may be estimated or calculated by the PND. Alternatively, the user may set a duration for which he wants to record the radio program, and the PND calculates a compression rate required to fit the recording on the memory card inserted.

The embodiment of Fig. 2 combines a fully functional personal navigation device and a multi-band radio receiver. Such a device is particularly useful for travelers and for hikers, who require both a device for navigating in unknown areas as well as a multi-band radio receiver for receiving radio programs over large distances. The possibility to record radio programs increases the functionality and may be particularly useful in situations where the user of the device may not be able to listen to the radio program live, but still depends on the information provided in the radio program.

It should be clear that the PND may comprise the full functionality of a modern PND, for example navigational functionality and multimedia functionality, such as the playback of MP3 files, recorded radio programs or of movie files or the display of images stored on the personal navigation device.

## Claims

1. A portable personal navigation device comprising at least one receiver (2, 21, 22) for radio waves and means for outputting audio signals (3), wherein a receiver (2, 22) is configured so as to receive radio programs and wherein said means for outputting audio signals (3) are configured so as to play back said radio programs,
**characterized by** further comprising means for recording radio programs capable of recording a radio program at predetermined times, the times being programmable by a user of the portable personal navigation device, wherein the means for recording radio programs comprise a memory card (30), said memory card being arranged in a slot (31) provided in the portable personal navigation device (1).

2. A portable personal navigation device according to Claim 1, **characterized in that** the receiver (2) configured to receive radio programs is also configured so as to receive a traffic message channel.

3. A portable personal navigation device according to Claim 1, **characterized by** comprising two receivers (21, 22) for radio waves, wherein one receiver (22) is configured so as to receive radio programs whereas the other receiver (21) is configured so as to receive a traffic message channel.

4. A portable personal navigation device according to any of the preceding Claims, **characterized in that** the receiver (2, 22) configured to receive radio programs can be tuned to at least a portion of one or a plurality of the following radio bands: very high frequency (VHF), shortwave (HF), medium wave, longwave.

5. A portable personal navigation device according to any of the preceding Claims, **characterized in that** the means for outputting audio signals (3) comprise at least one loudspeaker (5, 27), integrated in the portable personal navigation device (1).

6. A portable personal navigation device according to any of the preceding Claims, **characterized in that** the means for outputting audio signals (3) comprise a connector (28), said connector (28) providing said audio signals in the form of time varying voltages.

7. A portable personal navigation device according to any of the preceding Claims, **characterized in that** an antenna (6, 23) is provided for receiving the radio waves, said antenna (6, 23) being mounted to the portable personal navigation device (1).

8. A portable personal navigation device according to any of the preceding Claims, **characterized in that** an antenna is provided for receiving the radio waves, said antenna being connected to the portable personal navigation device by a connector.

9. A portable personal navigation device according to any of the preceding Claims, **characterized in that** the portable personal navigation device comprises a display, and that by actuation of control elements disposed on the portable personal navigation device (1), a radio menu is displayed on said display, said radio menu comprising at least functions for controlling said receiver for radio waves.

10. A portable personal navigation device according to any of the preceding Claims, **characterized in that** the portable personal navigation device is provided with a functionality similar to that of a multi-band radio.

11. A portable personal navigation device according to any of the preceding Claims, **characterized in that** the receiver (2) is an existing traffic message channel receiver of the portable personal navigation device (1) and that the means for outputting audio signals (3) are existing means for outputting audio signals of the portable personal navigation device (1), and that both are reconfigured in such a way that the receiver (2) receives radio broadcasts, said radio broadcasts being played back by said means for outputting audio signals (3).

12. A portable personal navigation device according to any of the preceding Claims, **characterized in that** the receiver is formed so as to receive digital radio programs.

13. A portable personal navigation device according to any of the preceding Claims, **characterized in that** three receivers are provided, one for receiving a traffic message channel, one for receiving analog radio programs and one for receiving digital radio programs.

## Patentansprüche

1. Tragbare persönliche Navigationsvorrichtung, umfassend wenigstens einen Empfänger (2, 21, 22) für Funkwellen und Mittel zum Ausgeben von Audiosignalen (3), wobei ein Empfänger (2, 22) dazu konfiguriert ist, Radiosendungen zu empfangen, und wobei das Mittel zum Ausgeben von Audiosignalen (3) dazu konfiguriert ist, die Radiosendungen wiederzugeben, **gekennzeichnet dadurch, dass** sie ferner ein Mittel zum Aufzeichnen von Radiosendungen umfasst, das dazu in der Lage ist, eine Radiosendung zu im Voraus festgelegten Zeiten aufzuzeichnen, wobei die Zeiten von einem Benutzer der tragbaren persönlichen Navigationsvorrichtung programmierbar sind, wobei das Mittel zum Aufzeichnen von Radiosendungen eine Speicherkarte (30) umfasst, wobei die Speicherkarte in einem Steckplatz (31) angeordnet ist, der in der tragbaren persönlichen Navigationsvorrichtung (1) vorgesehen ist.

2. Tragbare persönliche Navigationsvorrichtung nach Anspruch 1, **dadurch gekennzeichnet, dass** der Empfänger (2), der dazu konfiguriert ist, Radiosendungen zu empfangen, auch dazu konfiguriert ist, einen Verkehrsmeldungssender zu empfangen.

3. Tragbare persönliche Navigationsvorrichtung nach Anspruch 1, **dadurch gekennzeichnet, dass** sie zwei Empfänger (21, 22) für Funkwellen umfasst, wobei ein Empfänger (22) dazu konfiguriert ist, Radiosendungen zu empfangen, während der andere Empfänger (21) dazu konfiguriert ist, einen Verkehrsmeldungssender zu empfangen.

4. Tragbare persönliche Navigationsvorrichtung nach einem der vorangehenden Ansprüche, **dadurch gekennzeichnet, dass** der Empfänger (2, 22) der zum Empfangen von Radiosendungen konfiguriert ist, auf wenigstens einen Teil von einem oder mehreren der folgenden Funkfrequenzbänder eingestellt werden kann: sehr hohe Frequenz (VHF), Kurzwelle (HF), Mittelwelle, Langwelle.

5. Tragbare persönliche Navigationsvorrichtung nach einem der vorangehenden Ansprüche, **dadurch gekennzeichnet, dass** das Mittel zum Ausgeben von Audiosignalen (3) wenigstens einen Lautsprecher (5, 27) umfasst, der in die tragbare persönliche Navigationsvorrichtung (1) integriert ist.

6. Tragbare persönliche Navigationsvorrichtung nach einem der vorangehenden Ansprüche, **dadurch gekennzeichnet, dass** das Mittel zum Ausgeben von Audiosignalen (3) einen Anschluss (28) aufweist, wobei der Anschluss (28) Audiosignale in der Form von zeitlich variierenden Spannungen bereitstellt.

7. Tragbare persönliche Navigationsvorrichtung nach einem der vorangehenden Ansprüche, **dadurch gekennzeichnet, dass** eine Antenne (6, 23) vorgesehen ist, um die Funkwellen zu empfangen, wobei die Antenne (6, 23) an der tragbaren persönlichen Navigätionsvorrichtung (1) angebracht ist.

8. Tragbare persönliche Navigationsvorrichtung nach einem der vorangehenden Ansprüche, **dadurch gekennzeichnet, dass** eine Antenne vorgesehen ist, um die Funkwellen zu empfangen, wobei die Antenne über einen Anschluss mit der tragbaren persönlichen Navigationsvorrichtung verbunden ist.

9. Tragbare persönliche Navigationsvorrichtung nach einem der vorangehenden Ansprüche, **dadurch gekennzeichnet, dass** die tragbare persönliche Navigationsvorrichtung eine Anzeige umfasst, und dass durch Betätigen von Steuerelementen, die an der tragbaren persönlichen Navigationsvorrichtung (1) angeordnet sind, ein Radiomenü auf der Anzeige angezeigt wird, wobei das Radiomenü wenigstens Funktionen zum Steuern des Empfängers für Funkwellen umfasst.

10. Tragbare persönliche Navigationsvorrichtung nach einem der vorangehenden Ansprüche, **dadurch gekennzeichnet, dass** die tragbare persönliche Navigationsvorrichtung mit einer Funktion ähnlich wie ein Weltempfangsradio versehen ist.

11. Tragbare persönliche Navigationsvorrichtung nach einem der vorangehenden Ansprüche, **dadurch gekennzeichnet, dass** der Empfänger (2) ein existierender Verkehrsmeldungssenderempfänger der tragbaren persönlichen Navigationsvorrichtung (1) ist und dass das Mittel zum Ausgeben von Audiosignalen (3) ein existierendes Mittel zum Ausgeben von Audiosignalen der tragbaren persönlichen Navigationsvorrichtung (1) ist, und dass beide derart umkonfiguriert sind, dass der Empfänger (2) Radioübertragungen empfängt, wobei die Radioübertragungen von dem Mittel zum Ausgeben von Audiosignalen (3) wiedergegeben werden.

12. Tragbare persönliche Navigationsvorrichtung nach einem der vorangehenden Ansprüche, **dadurch gekennzeichnet, dass** der Empfänger derart gebildet ist, dass er digitale Radiosendungen empfängt.

13. Tragbare persönliche Navigationsvorrichtung nach einem der vorangehenden Ansprüche, **dadurch gekennzeichnet, dass** drei Empfänger vorgesehen sind, einer zum Empfangen eines Verkehrsmeldungssenders, einer zum Empfangen von analogen Radiosendungen und einer zum Empfangen von digitalen Radiosendungen.

## Revendications

1. Dispositif personnel portable de navigation comprenant au moins un récepteur (2, 21,22) pour ondes radio et un moyen d'émission de signaux audio (3), un récepteur (2, 22) étant configuré pour recevoir des programmes radio et ledit moyen d'émission de signaux audio (3) étant configurés pour retransmettre lesdits programmes radio, **caractérisé par** le fait de comprendre en outre un moyen d'enregistrement de programmes radio à même d'enregistrer un programme radio à des heures prédéterminées, les heures étant programmables par un utilisateur du dispositif personnel portable de navigation, le moyen d'enregistrement de programmes radio comprenant une carte mémoire (30), ladite carte mémoire étant disposée dans une fente (31) prévue dans le dispositif personnel portable de navigation (1).

2. Dispositif personnel portable de navigation selon la revendication 1, **caractérisé en ce que** le récepteur (2), configuré pour recevoir des programmes radio, est aussi configuré pour recevoir un canal de messages de trafic.

3. Dispositif personnel portable de navigation selon la revendication 1, **caractérisé par** le fait de comprendre deux récepteurs (21, 22) pour ondes radio, un récepteur (22) étant configuré pour recevoir des programmes radio alors que l'autre récepteur (21) est configuré pour recevoir un canal de messages de trafic.

4. Dispositif personnel portable de navigation selon l'une quelconque des revendications précédentes, **caractérisé en ce que** le récepteur (2, 22), configuré pour recevoir des programmes radio, peut être syntonisé sur au moins une partie d'une des bandes radio suivantes ou sur une parmi une pluralité de ces bandes : très haute fréquence (THF), ondes courtes (HF), ondes moyennes ou longues ondes.

5. Dispositif personnel portable de navigation selon l'une quelconque des revendications précédentes, **caractérisé en ce que** le moyen d'émission de signaux audio (3) comprend au moins un haut-parleur (5, 27) intégré dans le dispositif personnel portable de navigation (1).

6. Dispositif personnel portable de navigation selon l'une quelconque des revendications précédentes, **caractérisé en ce que** le moyen d'émission de signaux audio (3) comprend un connecteur (28), ledit connecteur (28) fournissant lesdits signaux audio sous la forme de tensions variables dans le temps.

7. Dispositif personnel portable de navigation selon l'une quelconque des revendications précédentes, **caractérisé en ce qu'**une antenne (6, 23) est prévue pour recevoir les ondes radio, ladite antenne (6, 23) étant montée sur le dispositif personnel portable de navigation (1).

8. Dispositif personnel portable de navigation selon l'une quelconque des revendications précédentes, **caractérisé en ce qu'**une antenne est prévue pour recevoir les ondes radio, ladite antenne étant connectée au dispositif personnel portable de navigation par un connecteur.

9. Dispositif personnel portable de navigation selon l'une quelconque des revendications précédentes, **caractérisé en ce que** le dispositif personnel portable de navigation comprend un affichage, et **en ce que** par l'actionnement d'éléments de commande disposés sur le dispositif personnel portable de navigation (1), un menu radio est affiché sur ledit affichage, ledit menu radio comprenant au moins des fonctions permettant de commander ledit récepteur d'ondes radio.

10. Dispositif personnel portable de navigation selon l'une quelconque des revendications précédentes, **caractérisé en ce que** le dispositif personnel portable de navigation est doté d'une fonctionnalité similaire à celle d'une radio multibande.

11. Dispositif personnel portable de navigation selon l'une quelconque des revendications précédentes, **caractérisé en ce que** le récepteur (2) est un récepteur existant de canaux de message de trafic du dispositif personnel portable de navigation (1) et **en ce que** le moyen d'émission de signaux audio (3) est un moyen existant pour émettre des signaux audio du dispositif personnel portable de navigation (1), et **en ce que** les deux sont reconfigurés de manière que le récepteur (2) reçoit des émissions de radio, lesdites émissions de ratio étant retransmises par ledit moyen d'émission de signaux audio (3).

12. Dispositif personnel portable de navigation selon l'une quelconque des revendications précédentes, **caractérisé en ce que** le récepteur est formé de manière à recevoir des programmes radio numériques.

13. Dispositif personnel portable de navigation selon l'une quelconque des revendications précédentes, **caractérisé en ce que** trois récepteurs sont prévus, un pour recevoir un canal de messages de trafic, un pour recevoir des programmes radio analogiques et un pour recevoir des programmes radio numériques.
